# EUROPÄISCHE PATENTSCHRIFT

(11) **EP 0 605 845 B1**
(45) Veröffentlichungstag und Bekanntmachung des Hinweises auf die Patenterteilung: **04.09.1996**
(21) Anmeldenummer: 93120693.2
(22) Anmeldetag: 23.12.1993
(51) Int. Cl.: F16K 11/044, G05D 23/13

(54) **Mischbatterie**
Cartridge for a mixing valve
Cartouche pour un robinet mélangeur

(30) Priorität: 07.01.1993 DE 4300183
(43) Veröffentlichungstag der Anmeldung: 13.07.1994
(73) Patentinhaber: FRIEDRICH GROHE AKTIENGESELLSCHAFT, D-58675 Hemer (DE)
(72) Erfinder: Kahle, Dieter, D-58636 Iserlohn (DE); Stolle, Eberhard, D-58119 Hagen (DE); Schutzeichel, Walter, D-58706 Menden (DE)

(56) Entgegenhaltungen:
- EP-A- 0 156 122
- EP-A- 0 196 000
- EP-A- 0 232 454
- EP-A- 0 560 737
- DE-A- 3 612 988
- GB-A- 2 253 680

## Beschreibung

Die Erfindung bezieht sich auf eine Mischbatterie für Kalt- und Warmwasser mit stromaufwärts zueinander bewegbar angeordneten, aneinanderliegenden Ventilscheiben mit separaten Durchbrüchen zur synchronen Dosierung und Absperrung des zufließenden Kalt- und Warmwassers und jeweils einem zentralen Durchbruch für die Rückführung von Mischwasser sowie einem nachgeschalteten, in einem mit der bewegbaren Ventilscheibe verbundenen, entsprechende separate Kanäle für das Kalt- und Warmwasser aufweisenden Mitnehmergehäuse angeordneten, temperaturgeregelten Mischventil, wobei eine ortsfest gehaltene Ventilscheibe wenigstens an der der beweglichen Ventilscheibe zugekehrten Stirnseite auf einem Lochkreis diametral gegenüberliegende, ringförmige Schlitze aufweist und die bewegbare Ventilscheibe drehbar ist und entsprechende ringförmige, als Durchbrüche ausgebildete Schlitze hat, wobei die Schlitze sich über einen Kreisbogen von weniger als 90° erstrecken.
Eine Mischbatterie dieser Art ist aus der Druckschrift GB-A-22 53 680 bekannt. Bei dieser Einrichtung ist jedoch ein besonderes, axial vorstehendes Anschlußstück (Nasenstück) erforderlich. Darüber hinaus ist die Wasserführung in dieser Einrichtung relativ kompliziert. Außerdem sind verhältnismäßig enge Kanäle für das durchfließende Wasser vorgesehen, so daß nur eine verhältnismäßig geringe Durchflußleistung mit dieser Einrichtung erreichbar sein dürfte.

Ferner ist eine weitere Mischbatterie aus der deutschen Offenlegungsschrift DE-A-36 12 988 bekannt, bei der die beiden Ventilscheiben radial zueinander verschiebbar angeordnet sind.
Eine Anordnung dieser bekannten Einrichtungen in Armaturenkörper, die für in großer Stückzahl vertriebene Eingriffmischventilkartuschen, wie sie aus der europäischen Patentschrift EP-B-0 196 000 bekannt ist, vorgesehen sind, ist jedoch so gut wie nicht möglich.

Der Erfindung liegt die Aufgabe zugrunde, die gattungsmäßig im Anspruch 1 angegebene Mischbatterie zu verbessern und kompakter auszubilden.
Diese Aufgabe wird erfindungsgemäß mit der im Anspruch 1, 2 oder 3 angegebenen Mischbatterie gelöst.
Weitere Ausgestaltungen der Erfindung sind in den Ansprüchen 4 bis 17 angegeben.

Mit den vorgeschlagenen Maßnahmen wird insbesondere erreicht, daß die erfindungsgemäße thermostatgeregelte Mischbatteriekartusche so ausgebildet werden kann, daß die wesentlichen Außenabmessungen und die Wasseranschlüsse der bekannten Eingriffmischventilkartusche (EP 0 196 000 B1), bei der lediglich eine Steuerung der Wassermischung vorgesehen ist, entsprechen. Hierdurch kann bei den Armaturenkörpern, die einer aufwendigen Oberflächenveredelung und/oder Farbbeschichtung unterzogen werden, die Lagerhaltung vereinfacht werden, da für gesteuerte oder geregelte Mischarmaturen der gleiche Armaturenkörper verwendet werden kann.
Durch die zentrische Anordnung und koaxiale Bauweise, wobei der Thermostat zu einem erheblichen Teil in einem zentralen Aufnahmeraum in den Keramikscheiben angeordnet ist, ist eine relativ einfache Fertigung und hohe Betriebssicherheit erreichbar. Die drehbare Ventilscheibe kann hierbei sowohl die koaxiale Kalt- und Warmwasserführung als auch zusammen mit dem Doppelsitzventilkörper den Warmwassereinlaßspalt bilden. Die Kalt- und Warmwasserschlitze in der drehbaren Scheibe werden vorteilhaft radial versetzt und schmaler ausgebildet als auf der unteren ortsfesten Ventilscheibe, wodurch erreichbar ist, daß die separaten Kanäle für das Kalt- und Warmwasser im Mitnehmer etwa ringförmig ausgebildet werden können und mit dem gesamten Ringbereich der Warm- und Kaltwassereinlaßspalte in Verbindung stehen. Mit der diametral gegenüberliegenden Anordnung der Schlitze in den beiden Ventilscheiben wird außerdem erreicht, daß durch eine einfache 180°-Drehung der drehbaren Ventilscheibe ein Umstellen bzw. ein Anpassen bei seitenverkehrtem Kalt-und Warmwasseranschluß an dem Armaturenkörper erfolgen kann.

Ein Ausführungsbeispiel der Erfindung ist in der Zeichnung dargestellt und wird im folgenden näher erläutert. Es zeigt
- Figur 1: eine sanitäre Aufputz-Wassermischbatterie;
- Figur 2: einen Teil der in Figur 1 gezeigten Mischbatterie in vergrößerter Darstellung, teilweise geschnitten;
- Figur 3: eine in Figur 2 gezeigte Mischventilkartusche im Längsschnitt in vergrößerter Darstellung;
- Figur 3a: die in Figur 3 gezeigte Mischventilkartusche in Druntersicht;
- Figur 4: eine in Figur 3 gezeigte ortsfeste Ventilscheibe in Draufsicht;
- Figur 5: die Ventilscheibe gemäß Figur 4 in der Schnittebene V;
- Figur 6: die in Figur 3 gezeigte drehbare Ventilscheibe in Druntersicht;
- Figur 7: die Ventilscheibe gemäß Figur 6 in der Schnittebene VII;
- Figur 8: die in Figur 7 gezeigte Ventilscheibe in Draufsicht;
- Figur 9: den in Figur 3 gezeigten Mitnehmer mit eingesetzter Exzenterhülse und Federscheibe im Längsschnitt;
- Figur 9a: den Mitnehmer gemäß Figur 9 in Druntersicht;

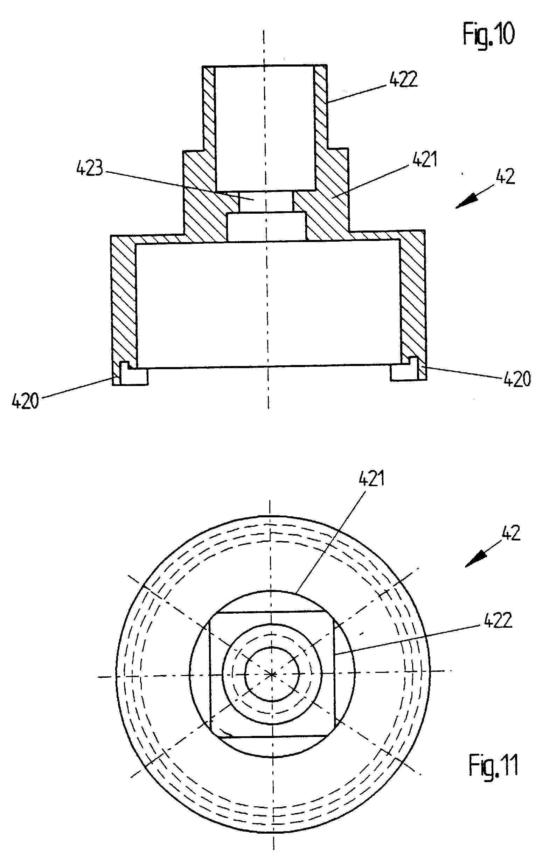

- Figur 10: den Mitnehmer gemäß Figur 3 im Seitenschnitt;
- Figur 11: den Mitnehmer gemäß Figur 10 in Draufsicht;
- Figur 12: die Exzenterhülse im Schnitt;
- Figur 13: eine Druntersicht der in Figur 12 gezeigten Exzenterhülse;
- Figur 14: eine Draufsicht der in Figur 12 gezeigten Exzenterhülse.

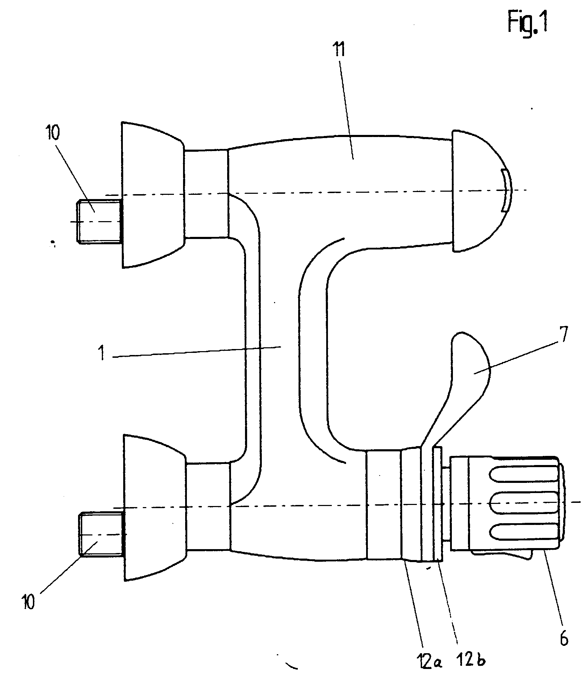

Die in Figur 1 gezeigte sanitäre Wasserarmatur 1 weist einen in Draufsicht etwa H-förmigen Armaturenkörper auf, der mit zwei mit Abstand zueinander angesehenen Anschlüssen 10 für das Kalt- und Warmwasser versehen ist. An der gegenüberliegenden Seite ist einerseits ein Auslauf 11 für die Abgabe von Mischwasser ausgebildet, während auf der gegenüberliegenden Seite eine Temperaturvorwähleinrichtung 6 und ein Stellhebel 7 zur Absperrung bzw. Dosierung der austretenden Mischwassermenge am Auslauf 11 vorgesehen sind.

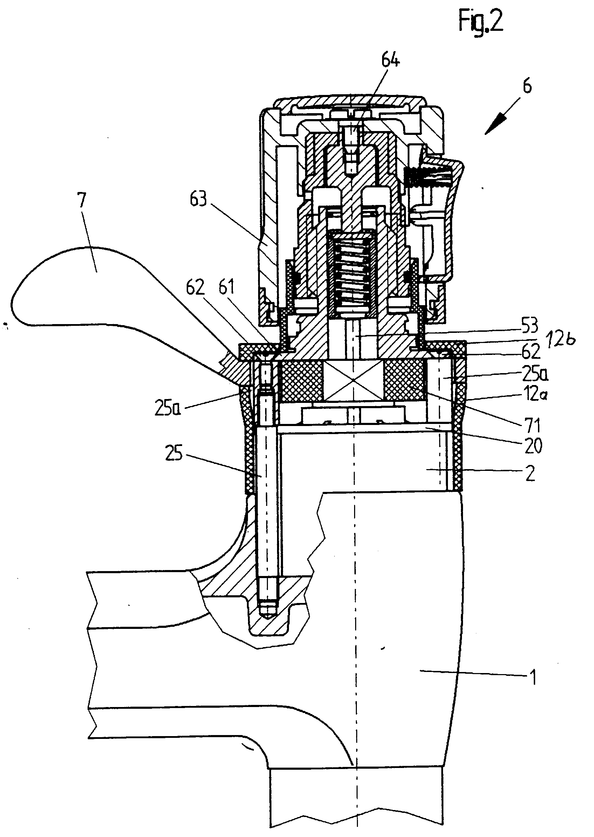

Die insbesondere in Figur 2 in der Zeichnung dargestellte Temperaturvorwähleinrichtung 6 entspricht im wesentlichen der Stellvorrichtung, wie sie in der europäischen Patentschrift 0 232 454 B1 offenbart ist. Lediglich das Kopfstück ist hierbei nicht mit einem Schraubgewinde, sondern mit einem radial vorstehenden Flansch 61 ausgebildet, welcher mittels Schrauben 62 auf Formmuttern 25a, die auf zwei in der Armatur 1 befestigten Stehbolzen 25 angeordnet sind, gehaltert ist.

Von den Stehbolzen 25 mit den Formmuttern 25a ist mit Hilfe einer metallenen Druckscheibe 20 ein Kartuschengehäuse 2 gegen eine Anschlußfläche in der Armatur 1 verspannt. Im Bereich der etwa zylindrischen Formmuttern 25a ist außerdem der Stellhebel 7 mit einer Ringscheibe 71 begrenzt verdrehbar gehalten. Um einen harmonischen Übergang von der Temperaturvorwähleinrichtung 6 zu dem Körper der Armatur 1 herzustellen, sind außerdem Abdeckhauben 12a,12b im Bereich der Ringscheibe 71 vorgesehen.

Die Temperaturvorwähleinrichtung 6 wirkt auf einen koaxial im Kartuschengehäuse 2 angeordneten Stößel 53 eines Mischventils 5 ein, während der Stellhebel 7 über den Mitnehmer 42 mit einer Einrichtung zur synchronen Dosierung und Absperrung des zufließenden Kalt- und Warmwassers verbunden ist, wie es im nachfolgenden näher erläutert werden wird.

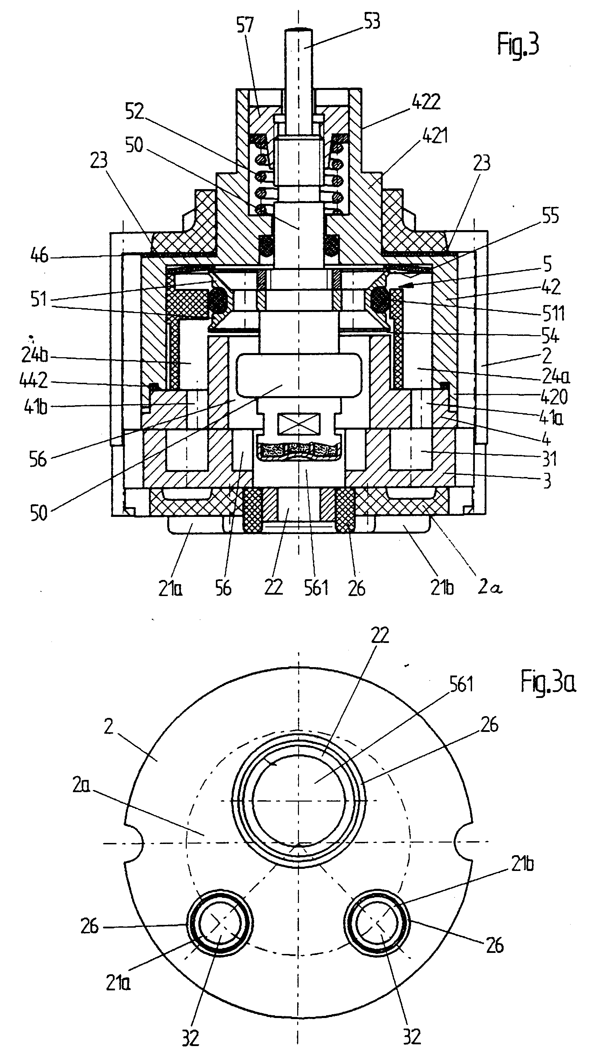

In dem etwa rotationssymmetrisch aufgebauten Kartuschengehäuse 2, wie es insbesondere aus Figur 3 zu entnehmen ist, ist ein Boden 2a mit Einlaßöffnungen 21a, 21b für das Kalt- und Warmwasser sowie eine Auslaßöffnung 22 für das Mischwasser vorgesehen. Oberhalb des Bodens 2a ist eine etwa orts- und drehfest gehalterte Ventilscheibe 3 aus Keramikmaterial angeordnet, an dessen geglätteter Stirnseite eine ebenfalls mit einer geglätteten Stirnseite versehene, drehbare Ventilscheibe 4 aus Keramikmaterial anliegt. Die Ventilscheibe 4 wird dabei von einem topfartigen Mitnehmer 42 mit einem gummielastischen Ring gedichtet und von Kupplungsvorsprüngen 420 drehfest gehaltert. Der Mitnehmer 42 stützt sich dabei axial an einer Schulter 23 des Kartuschengehäuses 2 ab und ist mit einem Ansatz 421 aus dem Kartuschengehäuse 2 herausgeführt. Am äußeren Ende des Ansatzes 421 ist ein Polygonprofil 422 in Form eines Vierkants ausgebildet, mit dem eine drehfeste Kupplung mit der Ringscheibe 71 und dem Stellhebel 7 herstellbar ist. Der Mitnehmer 42 ist dabei mit seinem Ansatz 421 in einer Durchtrittsbohrung des Kartuschengehäuses 2 drehbar gelagert, so daß mit dem Stellhebel 7 über den Mitnehmer 42 die Ventilscheibe 4 zur ortsfest gehalterten Ventilscheibe 3 verdrehbar ist.
Koaxial in dem Ansatz 421 ist in einer Bohrung 423 ein temperaturgeregeltes Mischventil 5 mit einem Thermostaten 50 und einem Doppelsitzventilkörper 51 axial verschiebbar angeordnet. Der Thermostat 50 mit dem Doppelsitzventilkörper 51 ist hierbei von einer Rückstellfeder 52 mit dem Stößel 53 gegen die Temperaturvorwähleinrichtung 6 gestrammt.

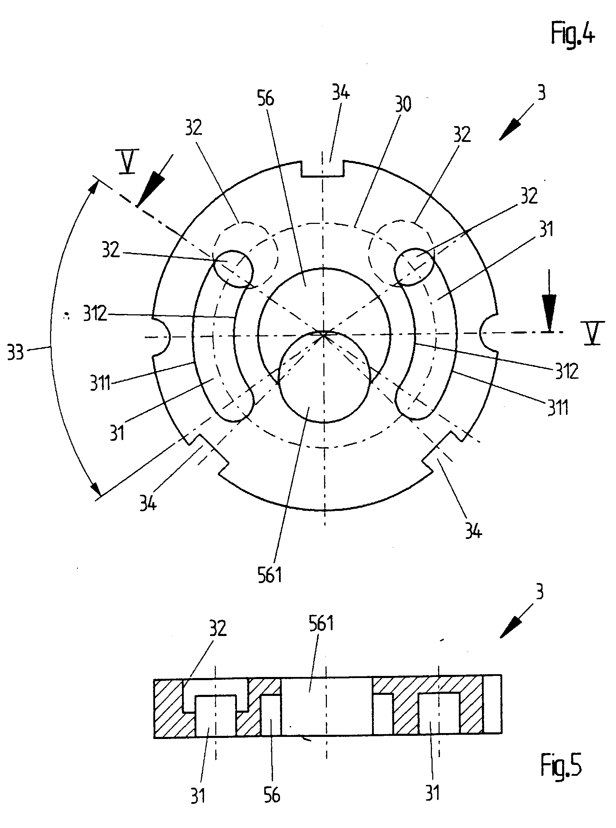

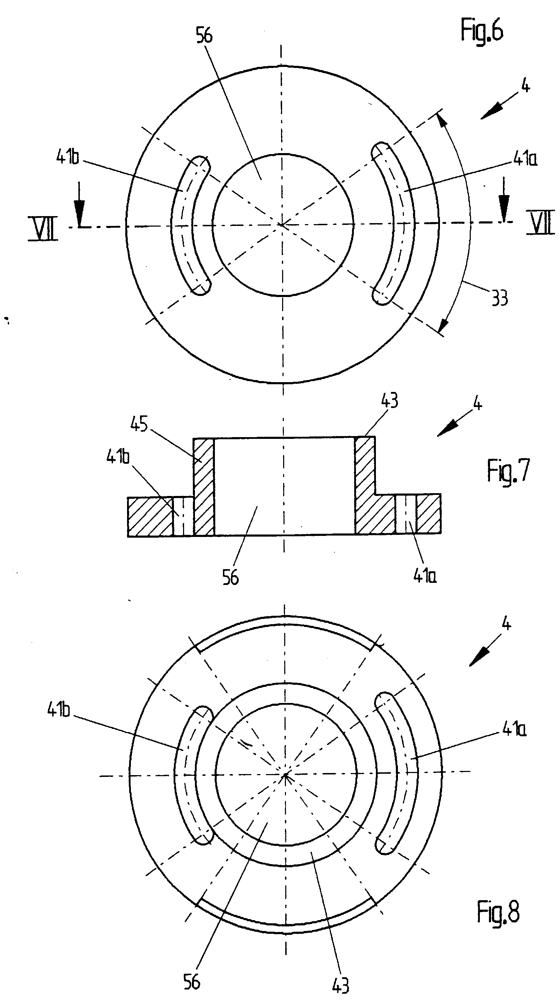

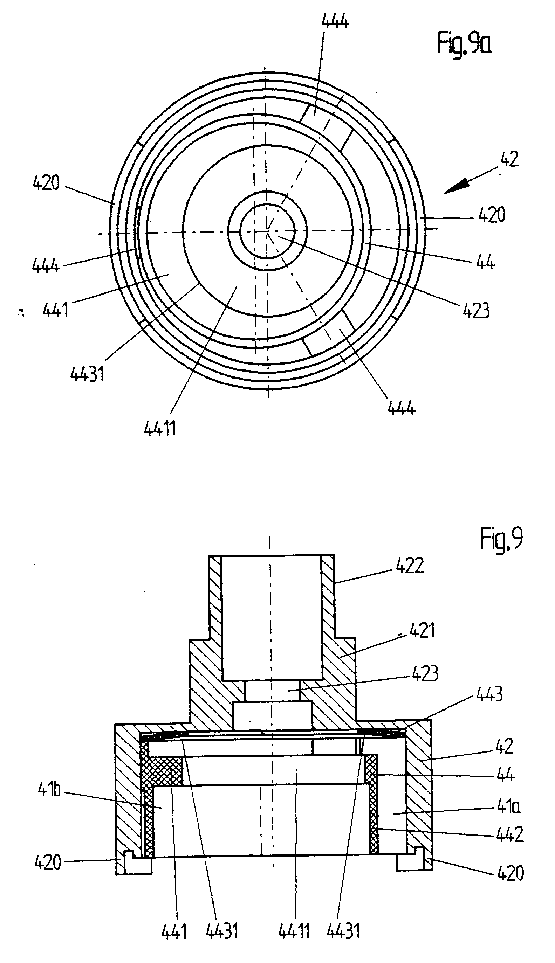

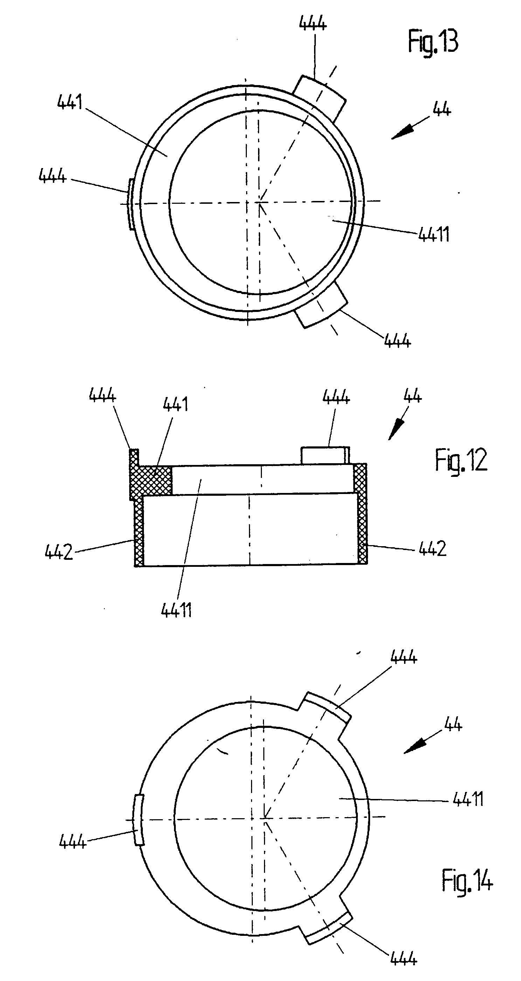

Die Einlaßöffnungen 21a,21b im Boden 2a sind über Durchbrüche 32 mit zwei diametral gegenüberliegend auf einem Kreisbogen 33 von etwa 70° angeordneten Schlitzen 31 verbunden. Die Schlitze 31 sind dabei von der geglätteten Oberfläche aus gesehenen Stirnseite rinnenförmig ausgebildet, wie es insbesondere aus Figur 4 und 5 der Zeichnung zu entnehmen ist. Zentral in der Ventilscheibe 3, von der geglätteten Stirnseite aus gesehen, ist außerdem eine als Freiraum ausgebildete Mischkammer 56 vorgesehen, die mit einem Durchbruch 561 mit der Auslaßöffnung 22 im Boden 2a verbunden ist. Zur drehfesten Halterung der Ventilscheibe 3 im Kartuschengehäuse 2 sind Axialschlitze 34 ausgebildet, die mit entsprechenden Vorsprüngen an der inneren Mantelfläche des Kartuschengehäuses 2 zusammenwirken.
Die angelagerte, drehbare Ventilscheibe 4 weist zu den ringförmigen Schlitzen 31 der Ventilscheibe 3 entsprechende ringförmige, als Durchbrüche ausgebildete Schlitze 41a,41b auf, die etwa die halbe Breite der Schlitze 31 der Ventilscheibe 3 aufweisen. Hierbei ist ein Schlitz 41a einem Außenrand 311 und der andere Schlitz 41b einem Innenrand 312 der Schlitze 31 in der ortsfest gehaltenen Ventilscheibe 3 zugeordnet. Durch diese Zuordnung wird außerdem erreicht, daß bei einer Drehung der Ventilscheibe 4 um 180° die Einlaßöffnungen 21a,21b zum Mischventil 5 vertauscht werden, so daß bei einer falschen Installation der Anschlüsse für Kalt-und Warmwasser dieses durch eine Drehung der Ventilscheibe 4 um 180° korrigiert werden kann.
An der von der Dichtfläche abgekehrten Stirnseite der Ventilscheibe 4 ist ein rohrförmiger Ansatz 45 ausgebildet, dessen Stirnseite 43 mit dem Doppelsitzventilkörper 51 einen Warmwassereinlaßspalt 54 bildet. Koaxial zur Ventilscheibe 3 erstreckt sich auch durch die Ventilscheibe 4 die Mischkammer 56. In dem etwa rotationssymmetrisch ausgebildeten Mitnehmer 42 ist, wie es insbesondere aus Figur 9 und 9a zu entnehmen ist, eine Exzenterhülse 44, wie sie in den Figuren 12,13 und 14 in Einzeldarstellung gezeigt ist, angeordnet. Konzentrisch zum Doppelsitzventilkörper 51 ist in der Exzenterhülse 44 eine Einschnürung 441 ausgebildet, in der der Doppelsitzventilkörper 51 mit einer Dichtung 511 axial verschiebbar geführt ist. Zu der Einschnürung 441 ist ein exzentrisch angeordneter Mantel 442 so angeordnet, daß der an dem Innenrand 312 angeordnete Schlitz 41b von dem Mantel 442 umfaßt ist, dagegen der an dem Außenrand 311 angeordnete Schlitz 41a außerhalb des Mantels 442 verbleibt, so daß eine separate Wasserzuführung zu dem Kaltwassereinlaßspalt 55 und dem Warmwassereinlaßspalt 54 gebildet ist, wie es insbesondere aus Figur 3 zu entnehmen ist, wobei durch die Innenwandung des Mantels 442 und der Außenwandung des Ansatzes 45 ein separater, etwa ringförmiger Kanal 24b für Warmwasser und durch die Außenwandung des Mantels 442 und der Innenwandung des Mitnehmers 42 ein separater, etwa ringförmiger Kanal 24a für Kaltwasser gebildet wird.
Damit die Exzenterhülse 44 mit der Stirnseite ihres Mantels 42 dicht an der Stirnfläche der drehbaren Ventilscheibe 4 aufliegt, ist die Exzenterhülse 44 von einer Federscheibe 443, die sich an einer inneren Stirnseite des Mitnehmers 42 abstützt, gegen die Ventilscheibe 4 gestrammt. Die Federscheibe 443 ist dabei so ausgebildet und angeordnet, daß ihr innerer Rand 4431 gleichzeitig den Ventilsitz für den Doppelsitzventilkörper 51 bildet, so daß der Mitnehmer 42 kostengünstig aus Kunststoff hergestellt sein kann. Damit die Exzenterhülse 44 gleichmäßig gegen die Ventilscheibe 4 gestrammt wird, weist sie oberhalb der Einschnürung 441 Stütznasen 444 auf, wie es insbesondere aus Figur 12 bis 14 zu entnehmen ist.

Der Zusammenbau der Batteriekartusche und der Einbau in der Armatur kann in folgender Weise vorgenommen werden:

Zunächst wird in den Mitnehmer 42 die Federscheibe 443 eingebracht und danach der Thermostat 50 mit dem Doppelsitzventilkörper 51 mit seinem Schaft durch die mit einem O-Ring gedichtete Bohrung 423 eingeschoben und von der Gegenseite die Rückstellfeder 52 in eine Aufnahmebohrung eingesetzt und mit einer Spannmutter 57 gegen den Grund der Bohrung verspannt, so daß nunmehr der Thermostat 50 mit dem Doppelsitzventilkörper 51 gegen den von der Federscheibe 443 gebildeten Ventilsitz gestrammt wird. Hiernach kann die Exzenterhülse 44 mit ihrer Lagerbohrung 4411 auf den mit einer Dichtung 511 versehenen Doppelsitzventilkörper 51 aufgeschoben werden. Im Anschluß daran kann, nachdem ein Dichtring 424 in eine Ringnut des Mitnehmers 42 eingelegt ist, die Ventilscheibe 4 mit ihren Ausnehmungen in die Kupplungsvorsprünge 420 eingeschoben werden. Nunmehr kann die zusammengefügte Baueinheit, nachdem ein Gleitring über den Ansatz 421 gestreift worden ist, in das Kartuschengehäuse 2 bis zur Anlage an die Schulter 23 eingebracht werden. Sodann kann die Ventilscheibe 3 mit ihren Axialschlitzen 34 in die entsprechenden Vorsprünge des Kartuschengehäuses 2 drehfest bis zur Anlage an der geglätteten Stirnfläche der Ventilscheibe 4 eingeschoben werden. Zum Abschluß kann dann der Boden 2a mit den schlauchförmigen Dichtungen 26 für die dichte Verbindung zwischen der Ventilscheibe 3 und der Anschlußfläche in der Armatur 1 in das Kartuschengehäuse 2 eingeführt werden.

Die komplettierte, von einem Thermostaten 50 temperaturgeregelte Mischbatteriekartusche kann nunmehr, nachdem z.B. eine sogenannte Eingriffmischerkartusche aus der Armatur entfernt worden ist oder bei neu montierten Armaturen unmittelbar in den Körper der Armatur 1 eingesetzt werden. Hierbei werden zunächst in der Armatur 1 die Stehbolzen 25 eingeschraubt und danach die Mischbatteriekartusche auf die Stehbolzen 25 aufgeschoben bis zur dichten Anlage an der Anschlußfläche in der Armatur 1. Hiernach wird die metallene Druckscheibe 20 von außen auf das Kartuschengehäuse 2 aufgeschoben und mit den beiden Formmuttern 25a gegen die Anschlußfläche der Armatur 1 dicht verspannt. Sodann kann die Ringscheibe 71 auf das Polygonprofil 422 zusammen mit dem Stellhebel 7 aufgeschoben werden. Im Anschluß daran kann die Abdeckhaube 12a aufgeschoben und die als Baueinheit vormontierte Temperaturvorwähleinrichtung 6 ohne Drehgriff 63 mit den Schrauben 62 befestigt werden, wobei der Stößel 53 an einem Druckstück der Temperaturvorwähleinrichtung 6 zur Anlage gelangt. Nach dem Aufbringen einer Abdeckkappe 12b und der Justierung des thermostatgeregelten Mischventils 5 wird der Drehgriff 63 mit einer Befestigungsschraube 64 an einer Stellmutter befestigt, so daß nunmehr mit dem Drehgriff 63 entsprechend der EP 0 232 454 B1 die Sollwerttemperatur des abzugebenden Mischwassers voreingestellt werden kann. Treten bei dem austretenden Mischwasser Abweichungen von der Sollwerttemperatur auf, so wird dieses von dem Thermostaten 50 in der Mischkammer 56 erfühlt und der Stößel 53 erfährt eine entsprechende axiale Auslenkung, so daß der Kaltwassereinlaßspalt 55 und der Warmwassereinlaßspalt 54 gegenläufig entsprechend zur Ausregelung der Mischwassertemperatur verändert werden.
Die Menge des ausfließenden Mischwassers bzw. die Absperrung des Mischwasserauslasses erfolgt über die beiden Ventilscheiben 3 und 4, die mit ihren geglätteten Stirnflächen wasserdicht, aber zueinander verdrehbar angeordnet sind. In der in Figur 3 gezeigten Stellung der Ventilscheiben zueinander ist der Durchfluß freigegeben. Wird dagegen mit dem Stellhebel 7 der Mitnehmer entsprechend verdreht, so daß die beiden Schlitze 41a,41b sich auf den geschlossenen Sektoren der ortsfest gehalterten Scheibe 5 befinden, so ist der Wasserdurchfluß abgesperrt. über einen Drehwinkel von 90° kann somit der Wasserdurchfluß von der Absperrstellung bis zur voll geöffneten Durchflußstellung eingestellt werden. Zur Begrenzung des Drehwinkels des Stellhebels 7 auf 90° sind in der Ringscheibe 71 entsprechende bogenförmige Schlitze ausgebildet, die mit den Formmuttern 25a zusammenwirken.

Bei seitenverkehrten Anschlüssen von Kalt- und Warmwasser ist lediglich die Temperaturvorwähleinrichtung 6 und der Stellhebel 7 abzumontieren und der Mitnehmer 42 am als Vierkant ausgebildeten Polygonprofil 422 um 180° zu drehen. Nach einer erneuten Anmontage des Stellhebels 7 und der Temperaturvorwähleinrichtung 6 ist dann die Armatur funktionsbereit.

## Patentansprüche

1. Mischbatterie für Kalt- und Warmwasser mit stromaufwärts zueinander bewegbar angeordneten, aneinanderliegenden Ventilscheiben mit separaten Durchbrüchen zur synchronen Dosierung und Absperrung des zufließenden Kalt- und Warmwassers und jeweils einem zentralen Durchbruch für die Rückführung von Mischwasser sowie einem nachgeschalteten, in einem mit der bewegbaren Ventilscheibe (4) verbundenen, entsprechende separate Kanäle für das Kalt- und Warmwasser aufweisenden Mitnehmergehäuse (42) angeordneten, temperaturgeregelten Mischventil (5), wobei eine ortsfestgehaltene Ventilscheibe (3) wenigstens an der der beweglichen Ventilscheibe (4) zugekehrten Stirnseite (2) auf einem Lochkreis (30) diametral gegenüberliegende, ringförmige Schlitze (31) aufweist und die bewegbare Ventilscheibe (4) drehbar ist und entsprechende ringförmige, als Durchbrüche ausgebildete Schlitze (41a,41b) hat, wobei die Schlitze (31,41a,41b) sich über einen Kreisbogen von weniger als 90° erstrecken, dadurch gekennzeichnet, daß die Schlitze (31) der ortsfesten Ventilscheibe (3) rinnenförmig ausgebildet sind und jeweils mit einem Durchbruch (32) zur äußeren Stirnseite verbunden sind, an der jeweils an dem Durchbruch (32) herum eine im Boden (2a) eines Kartuschengehäuses (2) gehaltene Dichtung (26) vorgesehen ist.

2. Mischbatterie für Kalt- und Warmwasser mit stromaufwärts zueinander bewegbar angeordneten, aneinanderliegenden Ventilscheiben mit separaten Durchbrüchen zur synchronen Dosierung und Absperrung des zufließenden Kalt- und Warmwassers und jeweils einem zentralen Durchbruch für die Rückführung von Mischwasser sowie einem nachgeschalteten, in einem mit der bewegbaren Ventilscheibe (4) verbundenen, entsprechende separate Kanäle für das Kalt- und Warmwasser aufweisenden Mitnehmergehäuse (42) angeordneten, temperaturgeregelten Mischventil (5), wobei eine ortsfestgehaltene Ventilscheibe (3) wenigstens an der der beweglichen Ventilscheibe (4) zugekehrten Stirnseite (2) auf einem Lochkreis (30) diametral gegenüberliegende, ringförmige Schlitze (31) aufweist und die bewegbare Ventilscheibe (4) drehbar ist und entsprechende ringförmige, als Durchbrüche ausgebildete Schlitze (41a,41b) hat, wobei die Schlitze (31, 41a, 41b) sich über einen Kreisbogen von weniger als 90° erstrecken, dadurch gekennzeichnet, daß die Schlitze (41a, 41b) der drehbaren Scheibe (4) etwa die halbe Breite der Schlitze (31) in der ortsfesten Scheibe (3) aufweisen, wobei der eine Schlitz (41a) dem Außenrand (311) und der andere Schlitz (41b) dem Innenrand (312) der Schlitze (31) in der ortsfesten Ventilscheibe (3) zugeordnet ist.

3. Mischbatterie für Kalt- und Warmwasser mit stromaufwärts zueinander bewegbar angeordneten, aneinanderliegenden Ventilscheiben mit separaten Durchbrüchen zur synchronen Dosierung und Absperrung des zufließenden Kalt- und Warmwassers und jeweils einem zentralen Durchbruch für die Rückführung von Mischwasser sowie einem nachgeschalteten, in einem mit der bewegbaren Ventilscheibe (4) verbundenen, entsprechende separate Kanäle für das Kalt- und Warmwasser aufweisenden Mitnehmergehäuse (42) angeordneten, temperaturgeregelten Mischventil (5), wobei eine ortsfestgehaltene Ventilscheibe (3) wenigstens an der der beweglichen Ventilscheibe (4) zugekehrten Stirnseite (2) auf einem Lochkreis (30) diametral gegenüberliegende, ringförmige Schlitze (31) aufweist und die bewegbare Ventilscheibe (4) drehbar ist und entsprechende ringförmige, als Durchbrüche ausgebildete Schlitze (41a,41b) hat, wobei die Schlitze (31,41a,41b) sich über einen Kreisbogen von weniger als 90° erstrecken, dadurch gekennzeichnet, daß an der drehbaren Ventilscheibe (4) ein rohrförmiger Ansatz (45) ausgebildet ist, dessen Stirnfläche (43) mit einem Doppelsitzventilkörper (51) des Mischventils (5) einen Warmwassereinlaßspalt (54) bildet.

4. Mischbatterie nach Anspruch 1, dadurch gekennzeichnet, daß der Durchbruch (32) als stufenförmige Aussenkung ausgebildet ist, wobei die Dichtung (26) schlauchartig geformt ist.

5. Mischbatterie nach wenigstens einem der Ansprüche 1 bis 4, dadurch gekennzeichnet, daß die Ventilscheiben (3,4) mit dem temperaturgeregelten Mischventil (5) in einem Kartuschengehäuse (2) gekapselt angeordnet sind, wobei an einer Stirnseite die Ein- und Auslaßöffnungen (21a, 21b, 22) für den Anschluß in der sanitären Armatur (1) und an der anderen Stirnseite die Stellglieder für die Einstellung der Durchflußmenge und der Temperatur des Mischwassers vorgesehen sind.

6. Mischbatterie nach Anspruch 5, dadurch gekennzeichnet, daß das Kartuschengehäuse (2) etwa den Außenabmessungen einer Ventilkartusche mit in zwei Freiheitsgraden bewegbarer Ventilscheibe zur steuerbaren Einstellung des Mischungsverhältnisses und der Durchflußmenge entspricht und die gleichen Ein- und Auslaßöffnungen (21a, 21b, 22) für Kalt-, Warm- und Mischwasser aufweist.

7. Mischbatterie nach wenigstens einem der Ansprüche 1 bis 6, dadurch gekennzeichnet, daß die bewegliche Ventilscheibe (4) von einem haubenförmigen Mitnehmer (42) drehfest und gedichtet aufgenommen ist, der sich an einer Schulter (23) des Kartuschengehäuses (2) abstützt und mit einem zentralen Ansatz (421) aus dem Kartuschengehäuse (2) herausgeführt ist, wobei an der äußeren Mantelfläche ein Polygonprofil (422) für die drehfeste Verbindung eines Stellhebels (7) zur Durchflußmengenregulierung vorgesehen ist.

8. Mischbatterie nach wenigstens einem der Ansprüche 1 bis 7, dadurch gekennzeichnet, daß in einer zentralen Bohrung (423) des Mitnehmers (42) ein Thermostat (50) mit einem Doppelsitzventilkörper (51) des Mischventils (5) axial gedichtet verschiebbar gelagert ist, wobei der Thermostat (50) von einer Rückstellfeder (52) mit einem Stößel (53) gegen eine Temperaturvorwähleinrichtung (6) gestrammt ist.

9. Mischbatterie nach wenigstens einem der Ansprüche 1 bis 8, dadurch gekennzeichnet, daß das Mischventil (5) mit dem Doppelsitzventilkörper (51) koaxial zur drehbaren Ventilscheibe (4) in dem Mitnehmer (42) angeordnet und von dem Doppelsitzventilkörper (51) mit einer Stirnseite (43) der Ventilscheibe (4) der Warmwassereinlaßspalt (54) und mit einer Stirnseite am Mitnehmer (42) der Kaltwassereinlaßspalt (55) bestimmt ist, wobei das Kalt- und Warmwasser in separaten Kanälen (24a,24b) zugeführt ist.

10. Mischbatterie nach wenigstens einem der Ansprüche 1 bis 9, dadurch gekennzeichnet, daß in dem Mitnehmer (42) eine Exzenterhülse (44) angeordnet ist, die konzentrische zum Doppelsitzventilkörper (51) eine Einschnürung (441) aufweist, in der der Doppelsitzventilkörper (51) mit einer Dichtung (511) axial beweglich geführt ist, wobei ein exzentrisch ausgebildeter Mantel (442) so angeordnet ist, daß der an dem Innenrand (312) angeordnete Schlitz (41b) von dem Mantel (442) umfaßt ist, während der an dem Außenrand (311) angeordnete Schlitz (41a) außerhalb des Mantels verbleibt, so daß eine separate Wasserzuführung zu dem Kalt- und Warmwassereinlaßspalt (55,54) ermöglicht ist.

11. Mischbatterie nach Anspruch 10, dadurch gekennzeichnet, daß die Exzenterhülse (44) mit Hilfe einer Federscheibe (443), die sich an einer inneren Stirnseite des Mitnehmers (42) abstützt, gegen die drehbare Ventilscheibe (4) gestrammt ist.

12. Mischbatterie nach Anspruch 11, dadurch gekennzeichnet, daß die Federscheibe (443) mit ihrem inneren Rand (4431) einen Ventilsitz für den Doppelsitzventilkörper (51) bildet.

13. Mischbatterie nach wenigstens einem der Ansprüche 1 bis 12, dadurch gekennzeichnet, daß die Schlitze (31, 41a, 41b) jeweils einen Kreisbogen (33) über etwa 70° bilden.

14. Mischbatterie nach wenigstens einem der Ansprüche 1 bis 13, dadurch gekennzeichnet, daß das Kartuschengehäuse (2) mittels Stehbolzen (25) und Formmuttern (25a) an der Armatur (1) dicht befestigt ist, wobei die Formmuttern (25a) in der Länge so bemessen sind, daß mit Abstand zum Kartuschengehäuse (2) die Temperaturvorwähleinrichtung (6) befestigbar und im Zwischenraum zum Kartuschengehäuse (2) der Stellhebel (7) mit einem entsprechenden Polygonprofil (422) auf der äußeren Mantelfläche des Mitnehmers (42) anzuordnen ist.

15. Mischbatterie nach Anspruch 14, dadurch gekennzeichnet, daß auf der äußeren Stirnfläche der Formmuttern (25a) die Temperaturvorwähleinrichtung (6) mit einem Flansch (61) mittels Schrauben (62) befestigt ist.

16. Mischbatterie nach Anspruch 14, dadurch gekennzeichnet, daß der Stellhebel (7) mit einer Ringscheibe (71) auf dem Mitnehmer (42) angeordnet ist, wobei in der Ringscheibe (71) Ringschlitze für die Formmuttern (25a) ausgebildet sind, derart, daß von dem Stellhebel (7) über die Ringscheibe (71) der Mitnehmer (42) von der geschlossenen bis zur voll geöffneten Stellung der Ventilscheiben (3,4) bewegbar ist.

17. Mischbatterie nach einem der Ansprüche 14 bis 16, dadurch gekennzeichnet, daß der Übergang von dem Flansch (61) und der Ringscheibe (71) zur Armatur (1) von Abdeckhauben (12a, 12b) verkleidet ist.

## Claims

1. Mixer tap for cold water and hot water having upstream valve disks resting one against the other and arranged to be movable in relation to one another, which valve disks have separate openings for synchronous metering and closing off of the cold water and hot water that are being supplied and one central opening each for the return of mixed water; and also a downstream temperature-regulated mixer valve (5) which is arranged in a carrier housing (42) that has corresponding separate channels for the cold water and hot water and is connected to the movable valve disk (4), in which mixer tap a valve disk (3) held in a fixed position has diametrically opposite annular slits (31) on a hole circle (30) at least on the face (2) that faces the movable valve disk (4) and the movable valve disk (4) is rotatable and has corresponding annular slits (41a, 41b) in the form of openings, the slits (31, 41a, 41b) extending over an arc of less than 90°, characterised in that the slits (31) of the fixed valve disk (3) are in the form of grooves and are each connected to an opening (32) to the outer face, on which outer face there is provided, around each opening (32), a seal (26) that is held in the base (2a) of a cartridge housing (2).

2. Mixer tap for cold water and hot water having upstream valve disks resting one against the other and arranged to be movable in relation to one another, which valve disks have separate openings for synchronous metering and closing off of the cold water and hot water that are being supplied and one central opening each for the return of mixed water; and also a downstream temperature-regulated mixer valve (5) which is arranged in a carrier housing (42) that has corresponding separate channels for the cold water and hot water and is connected to the movable valve disk (4), in which mixer tap a valve disk (3) held in a fixed position has diametrically opposite annular slits (31) on a hole circle (30) at least on the face (2) that faces the movable valve disk (4) and the movable valve disk (4) is rotatable and has corresponding annular slits (41a, 41b) in the form of openings, the slits (31, 41a, 41b) extending over an arc of less than 90°, characterised in that the slits (41a, 41b) of the rotatable disk (4) are approximately half the width of the slits (31) in the fixed disk (3), one slit (41a) being associated with the outer edge (311) and the other slit (41b) being associated with the inner edge (312) of the slits (31) in the fixed valve disk (3).

3. Mixer tap for cold water and hot water having upstream valve disks resting one against the other and arranged to be movable in relation to one another, which valve disks have separate openings for synchronous metering and closing off of the cold water and hot water that are being supplied and one central opening each for the return of mixed water; and also a downstream temperature-regulated mixer valve (5) which is arranged in a carrier housing (42) that has corresponding separate channels for the cold water and hot water and is connected to the movable valve disk (4), in which mixer tap a valve disk (3) held in a fixed position has diametrically opposite annular slits (31) on a hole circle (30) at least on the face (2) that faces the movable valve disk (4) and the movable valve disk (4) is rotatable and has corresponding annular slits (41a, 41b) in the form of openings, the slits (31, 41a, 41b) extending over an arc of less than 90°, characterised in that a tubular projecting piece (45) is formed on the rotatable valve disk (4), the face (43) of which tubular projecting piece forms with a double-seat valve body (51) of the mixer valve (5) a hot water inlet aperture (54).

4. Mixer tap according to claim 1, characterised in that the opening (32) is in the form of a stepped recess, the seal (26) being of tubular shape.

5. Mixer tap according to at least one of claims 1 to 4, characterised in that the valve disks (3, 4) are arranged, together with the temperature-regulated mixer valve (5), encapsulated in a cartridge housing (2), the inlet and outlet openings (21a, 21b, 22) for the connection to the sanitary fitting (1) being provided on one face and the adjusting members for setting the flow rate and the temperature of the mixed water being provided on the other face.

6. Mixer tap according to claim 5, characterised in that the cartridge housing (2) corresponds approximately to the outer dimensions of a valve cartridge having a valve disk that is movable in two degrees of freedom for the controllable setting of the mixing ratio and of the flow rate, and has the same inlet and outlet openings (21a, 21b, 22) for cold, hot and mixed water.

7. Mixer tap according to at least one of claims 1 to 6, characterised in that the movable valve disk (4) is accommodated by a hood-shaped carrier (42) sealingly and so as to co-rotate therewith, which carrier (42) bears against a shoulder (23) of the cartridge housing (2) and extends out of the cartridge housing (2) by a central projecting piece (421), a polygonal shaped piece (422) being provided on the outer surface for connecting co-rotationally an adjusting lever (7) for regulating the flow rate.

8. Mixer tap according to at least one of claims 1 to 7, characterised in that a thermostat (50) with a double-seat valve body (51) of the mixer valve (5) is mounted sealingly so as to be axially displaceable in a central bore (423) of the carrier (42), the thermostat (50) being tightened against a temperature preselection device (6) by means of a restoring spring (52) via a tappet (53).

9. Mixer tap according to at least one of claims 1 to 8, characterised in that the mixer valve (5) having the double-seat valve body (51) is arranged in the carrier (42) to be coaxial with the rotatable valve disk (4), and the hot water inlet aperture (54) is bounded by the double-seat valve body (51) and a face (43) of the valve disk (4) and the cold water inlet aperture (55) is bounded by the double-seat valve body (51) and a face on the carrier (42), the cold water and the hot water being supplied in separate channels (24a, 24b).

10. Mixer tap according to at least one of claims 1 to 9, characterised in that there is arranged in the carrier (42) an eccentric sleeve (44) which has a constriction (441) that is concentric with the double-seat valve body (51), in which constriction the double-seat valve body (51) having a seal (511) is guided to be movable axially, an eccentric jacket (442) being so arranged that the slit (41b) that is arranged at the inner edge (312) is surrounded by the jacket (442) whilst the slit (41a) that is arranged at the outer edge (311) remains outside the jacket thus enabling separate water supply to the cold and hot water inlet apertures (55, 54).

11. Mixer tap according to claim 10, characterised in that the eccentric sleeve (44) is tightened against the rotatable valve disk (4) by means of a spring washer (443) which bears against an inner face of the carrier (42).

12. Mixer tap according to claim 11, characterised in that the spring washer (443) forms with its inner edge (4431) a valve seat for the double-seat valve body (51).

13. Mixer tap according to at least one of claims 1 to 12, characterised in that the slits (31, 41a, 41b) each describe an arc (33) of approximately 70°.

14. Mixer tap according to at least one of claims 1 to 13, characterised in that the cartridge housing (2) is fastened impermeably to the fitting (1) by means of stud bolts (25) and moulded nuts (25a), the moulded nuts (25a) being of such a length that the temperature preselection device (6) is arranged to be attached to, but spaced from, the cartridge housing (2) and in the space between the former and the cartridge housing (2) the adjusting lever (7) is to be arranged with a corresponding polygonal shaped piece (422) on the outer surface of the carrier (42).

15. Mixer tap according to claim 14, characterised in that the temperature preselection device (6) is fastened by a flange (61) to the outer face of the moulded nuts (25a) by means of screws (62).

16. Mixer tap according to claim 14, characterised in that the adjusting lever (7) is arranged on the carrier (42) by means of an annular disk (71), annular slits being formed in the annular disk (71) for the moulded nuts (25a) in such a manner that the carrier (42) is movable from the closed setting to the fully opened setting of the valve disks (3, 4) by means of the adjusting lever (7) by way of the annular disk (71).

17. Mixer tap according to any one of claims 14 to 16, characterised in that the transition from the flange (61) and the annular disk (71) to the fitting (1) is concealed by cover hoods (12a, 12b).

## Revendications

1. Mitigeur pour eau froide et eau chaude comportant, en amont, des disques de soupape, juxtaposés, mobiles l'un par rapport à l'autre, et ayant des passages séparés pour le dosage et la fermeture synchrones de l'arrivée d'eau froide et de celle de l'eau chaude, un passage central pour le retour de l'eau mélangée ainsi qu'une soupape de mélange (5), régulée en température, reliée aux disques (4), mobiles, logés dans le boîtier de mitigeur (42) muni de canaux séparés pour l'eau froide et l'eau chaude, un disque de soupape (3), maintenu fixe, ayant au moins sur sa face frontale (2) tournée vers le disque de soupape (4) mobile, des fentes annulaires (31) diamétralement opposées sur un cercle à orifices (30), et le disque de soupape (4) mobile, tournant, comporte, comme passages, des fentes (41a, 41b), annulaires, correspondantes, les fentes (31, 41a, 41b) s'étendant sur un arc de cercle inférieur à 90°,
caractérisé en ce que
les fentes (31) du disque de soupape (3), fixe, sont en forme de gorges et sont respectivement reliées à un passage (32) débouchant dans la face extérieure, et contre cette face, autour du passage (32), un joint (26) est maintenu dans le fond (2a) d'un boîtier de cartouche (2).

2. Mitigeur pour eau froide et eau chaude comportant, en amont, des disques de soupape, juxtaposés, mobiles l'un par rapport à l'autre, ayant des passages séparés pour le dosage et la fermeture synchrones de l'arrivée d'eau froide et de l'arrivée d'eau chaude ainsi qu'un passage central respectif pour le retour de l'eau mélangée et, en aval, une soupape de mélange (5) régulée en température, logée dans un boîtier de mitigeur (42) relié au disque de soupape (4), mobile, comportant des canaux séparés pour l'eau froide et l'eau chaude, un disque de soupape (3), maintenu fixe, comportant au moins sur sa face frontale (2) tournée vers le disque de soupape (4) mobile, des fentes (31), annulaires, diamétralement opposées, réparties sur un cercle à orifices (30), et le disque de soupape (4), mobile tournant, comporte, comme passages, des fentes (41a, 41b), annulaires correspondantes, les fentes (31, 41a, 41b) s'étendant sur un arc de cercle inférieur à 90°,
caractérisé en ce que
les fentes (41a, 41b) du disque rotatif (4) ont une largeur correspondant sensiblement à la moitié de la largeur des fentes (31) du disque fixe (3), et
une fente (41a) se trouve au niveau du bord extérieur (311) de la fente (31) et l'autre fente (41b) au niveau du bord intérieur (312) de cette fente (31) dans le disque de soupape (3), fixe.

3. Mitigeur pour eau froide et eau chaude comportant, en amont, des disques de soupape juxtaposés, mobiles l'un par rapport à l'autre, ayant des passages séparés pour le dosage et la fermeture synchrones de l'arrivée d'eau froide et de celle d'eau chaude, ainsi qu'un passage central pour le retour de l'eau mélangée et, en aval, une soupape de mélange (5), régulée en température, logée dans un boîtier de mitigeur (42) relié au disque de soupape (4) mobile, comportant des canaux séparés pour l'eau froide et l'eau chaude,
un disque de soupape (3), maintenu fixe, ayant, au moins sur sa face (2) tournée vers le disque de soupape (4), mobile, des fentes annulaires (31) diamétralement opposées sur un cercle à orifices (30),
et le disque de soupape (4) mobile, tournant, et comporte, comme passages, des fentes (41a, 41b) annulaires correspondantes,
les fentes (31, 41a, 41b) s'étendant sur un arc de cercle inférieur à 90°,
caractérisé en ce que
le disque de soupape (4), rotatif, comporte un prolongement tubulaire (45) dont la surface frontale (43) forme un intervalle d'arrivée d'eau chaude (51) avec un corps de soupape à double siège (51) de la soupape de mélange (5).

4. Mitigeur selon la revendication 1,
caractérisé en ce que
le passage (32) est réalisé sous la forme d'une cavité étagée, le joint (26) étant tubulaire.

5. Mitigeur selon au moins l'une des revendications 1 à 4,
caractérisé en ce que
les disques de soupape (3, 4 ) sont montés de manière encapsulée dans un boîtier de cartouche (2) avec la soupape de mélange (5) régulée en température, et, sur une face frontale, se trouvent les orifices d'entrée et de sortie (21a, 21b, 22) pour le branchement dans le robinet à usage sanitaire (1) tandis que sur l'autre face frontale se trouvent les organes de réglage pour régler le débit et la température de l'eau mélangée.

6. Mitigeur selon la revendication 5,
caractérisé en ce que
le boîtier de cartouche (2) correspond sensiblement aux dimensions extérieures d'une cartouche de soupape avec un disque de soupape mobile suivant deux degrés de liberté pour le réglage commandé du rapport de mélange et du débit, et il comporte les mêmes orifices d'entrée et de sortie (21a, 21b, 22) pour l'eau froide, l'eau chaude et l'eau mélangée.

7. Mitigeur selon au moins l'une des revendications 1 à 6,
caractérisé en ce que
le disque de soupape (4), mobile, est logé solidairement en rotation et de manière étanche par un organe d'entraînement (42) en forme de chapeau, celui-ci s'appuyant contre un épaulement (23) du boîtier de cartouche (2), et vient en saillie du boîtier de cartouche (2) par un prolongement central (421),
la surface enveloppe extérieure ayant un profil polygonal (422) pour recevoir solidairement en rotation, un levier de réglage (7) servant à régler le débit.

8. Mitigeur selon au moins l'une des revendications 1 à 7,
caractérisé en ce qu'
un thermostat (50) est logé de manière coulissante, étanche axialement, avec un corps de soupape à double siège (51) de la soupape de mélange (5), dans un perçage central (423) de l'organe d'entraînement (42),
le thermostat (50) étant contraint par un ressort de rappel (52) avec un poussoir (53), contre une installation de présélection de température (6).

9. Mitigeur selon au moins l'une des revendications 1 à 8,
caractérisé en ce que
le mitigeur (5) est monté avec le corps de soupape à double siège (51), coaxialement par rapport au disque de soupape (4) tournant, avec l'organe d'entraînement (42), et le corps de soupape à double siège (51) définit, avec une face frontale (43) du disque de soupape (4), l'intervalle d'entrée d'eau chaude (54) et, avec une face frontale sur l'organe d'entraînement (42), l'intervalle d'entrée d'eau froide (55), l'eau froide et l'eau chaude arrivant par des canaux séparés (24a, 24b).

10. Mitigeur selon au moins l'une des revendications 1 à 9,
caractérisé en ce qu'
une douille excentrée (44) est placée dans l'organe d'entraînement (42), cette douille comportant une gorge (441) guidant, de manière mobile axialement, le corps de soupape à double siège (51) avec un joint (511),
une enveloppe (442) réalisée de manière excentrée étant montée pour que la fente (41b) prévue sur le bord intérieur (312) soit entourée par l'enveloppe (442), alors que la fente (41a) prévue sur le bord extérieur (311) reste à l'extérieur de l'enveloppe pour permettre une alimentation en eau séparée vers l'intervalle d'entrée d'eau froide et l'intervalle d'entrée d'eau chaude (55, 54).

11. Mitigeur selon la revendication 10,
caractérisé en ce que
la douille excentrée (44) est contrainte contre le disque de soupape rotatif (4) par une rondelle à ressort (443) s'appuyant elle-même contre la face frontale intérieure de l'organe d'entraînement (42).

12. Mitigeur selon la revendication 11,
caractérisé en ce que
la rondelle à ressort (443) forme, avec son bord intérieur (4431), un siège de soupape pour le corps de soupape à double siège (51).

13. Mitigeur selon au moins l'une des revendications 1 à 12,
caractérisé en ce que
les fentes (31, 41a, 41b) forment chacune un arc de cercle (33) s'étendant sur environ 70°.

14. Mitigeur selon au moins l'une des revendications 1 à 13,
caractérisé en ce que
le boîtier de cartouche (2) est fixé de manière étanche au robinet (1) à l'aide de goujons droits (25) et d'un écrou de forme (25a), les écrous (25a) ayant une longueur permettant à l'installation de présélection de température (6) d'être fixée avec un intervalle par rapport au boîtier de cartouche (2), et à l'intervalle avec le boîtier de cartouche (2), de recevoir le levier de réglage (7) avec un profil polygonal correspondant (422) sur la surface enveloppe extérieure de l'organe d'entraînement (42).

15. Mitigeur selon la revendication 14,
caractérisé en ce que
l'installation de présélection de température (6) est fixée avec une bride (61), par l'intermédiaire de vis (62), sur la surface frontale extérieure des écrous de forme (25a).

16. Mitigeur selon la revendication 14,
caractérisé en ce que
le levier de réglage (7) est monté sur l'organe d'entraînement (42) avec une rondelle annulaire (71), cette rondelle annulaire (71) comportant des fentes annulaires pour les écrous de forme (25a) de façon que le levier de réglage (7) puisse déplacer, par la rondelle annulaire (71), l'organe d'entraînement (42) de la position fermée jusqu'à la position d'ouverture maximale des disques de soupape (3, 4).

17. Mitigeur selon l'une des revendications 14 à 16,
caractérisé en ce que
le passage de la bride (61) et de la rondelle annulaire (71) au robinet (1) est habillé par des coiffes (12a, 12b).
